# EUROPEAN PATENT APPLICATION

(11) **EP 1 329 885 A2**
(43) Date of publication of application: **23.07.2003**
(21) Application number: 03250299.9
(22) Date of filing: 17.01.2003
(51) Int. Cl.: G11B 15/61, G11B 15/665

(54) **Tape deck**

(30) Priority: 17.01.2002 KR 2002002800
(71) Applicant: SAMSUNG ELECTRONICS CO. LTD., Suwon-city, Kyungki-do (KR)
(72) Inventor: Lee, Seung-woo, Paldal-gu, Suwon-city, Gyunggi-do (KR); Kim, Bong-joo, Paldal-gu, Suwon-city, Gyunggi-do (KR); Choi, Do-young, Kwonseon-gu, Suwon-city, Gyunggi-do (KR); Sim, Jae-hoom, Kwonseon-gu, Suwon-city, Gyunggi-do (KR); Cho, Young-ho, Paldal-gu, Suwon-city, Gyunggi-do (KR); Oh, Jeong-hyeob, Dongan-gu, Anyang-city, Gyunngi-do (KR); Choi, Hyeong-seok, Paldal-gu, Suwon-city, Gyunggi-do (KR)
(74) Representative: Geary, Stuart Lloyd

(57) **Abstract**

A tape guide device for a magnetic recording/reproducing apparatus includes a pole base assembly (50) to guide a tape, supplied from a supply reel and passed through a predetermined path, to move it horizontally to a read surface (41a) of a head drum (41). The pole base assembly (50) includes a pole base (51) and a pole unit (60) including a spiral flange (70) having an end face parallel to the read surface (41a) of the head drum (41), to guide the tape approaching the head drum such that it is inclined at a predetermined angle and aligned in the horizontal direction to the read surface (41a).

## Description

The present invention relates to a tape deck comprising an inclined head drum and a pole base unit movable from a tape unloaded position to a tape loaded position adjacent to the head drum, the pole base unit including a pole base, height setting means for setting the height of the tape and guiding means for guiding the tape such that its wraps smoothly around the head drum.

Magnetic recording/reproducing apparatuses, such as video cassette tape recorders and camcorders, record information on a recording medium such as a magnetic tape and reproduce the recorded information.

A magnetic recording/reproducing apparatus includes a main deck on which a head drum is rotatably installed, a main sliding member positioned on the main deck so that it can be slid right and left, a sub-deck disposed at the main deck so that it can be slid up and down, a transferring unit for transfer a cassette tape mounted on the sub-deck to a predetermined position on the main deck and a reel table, on which the two tape reels of the cassette tape are positioned and which is driven so as to rotate one of the tape reels. The head drum is used to record and reproduce information on the tape. The magnetic recording/reproducing apparatus also includes a tape loading unit for wrapping the tape partially about the head drum, and a tape guide device.

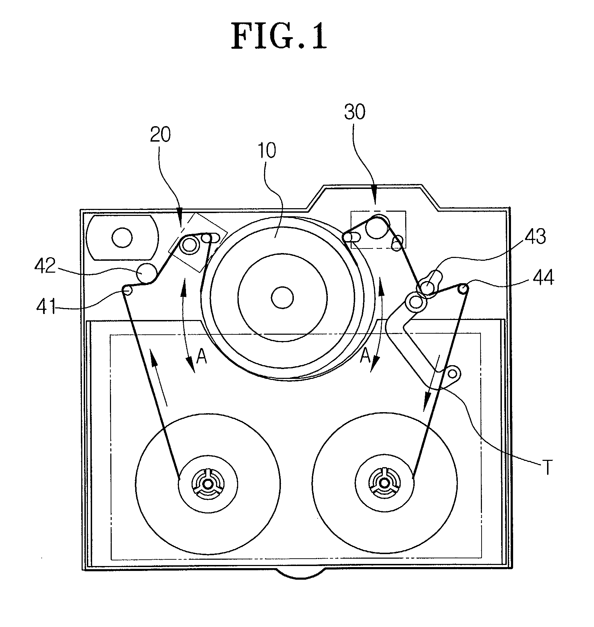

Figure 1 is a schematic plan view illustrating a conventional tape guide device of a magnetic recording/reproducing apparatus.

Referring to Figure 1, the conventional tape guide device includes an feed side pole base unit 20 and an take up side pole base unit 30 for guiding a tape T on opposite sides of a head drum 10 so that the tape T is wrapped around a major part of the head drum 10. The conventional tape guide also includes first to fourth guide posts 41, 42, 43, 44. The second and third guide posts 42, 43 are fixed on a main deck 1, and the first and fourth guide posts 41, 44 are moved with respect to the main deck 1 to guide the tape T and to adjust its tension.

Each of the pole base units 20, 30 is forwards and backwards as indicated by the arrows A over the main deck 1 by a transferring unit to guide the tape T. Since the head drum 10 is inclined on the main deck 1 at a predetermined angle, the pole base units 20, 30 are structured to incline the tape T so that is can wrap smoothly circumferentially around the head drum 10.

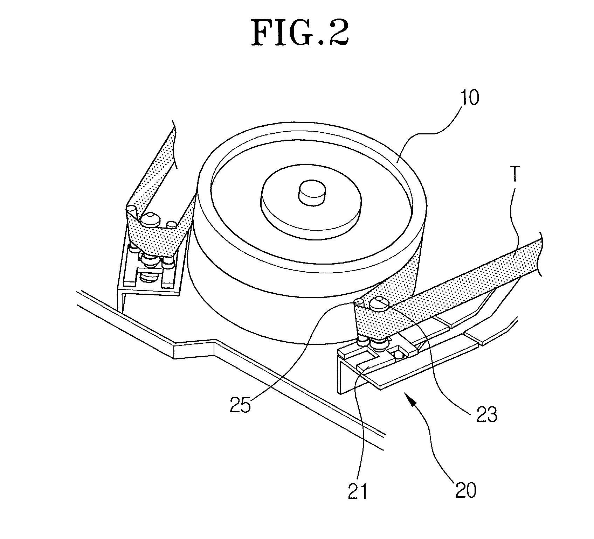

Figure 2 is a schematic perspective view of a detail from Figure 1.

Referring to Figure 2, the feed side pole base unit 20 includes a pole base 21, a support roller 23 and a fixed post 25. The support roller 23 is installed on the pole base 21 so that is moved forwards and backwards therewith. The height of the tape T is controlled by adjusting the position of the support roller 23. Since the head drum 10 is inclined, the fixed post 25 is inclined relative to the rotation support roller 23 so that the tape T extends circumferentially around the head drum 10 without kinks or creases or loss of contact.

However, the conventional tape guide device needs the support roller 23 and the fixed post 25 to maintain the tape in the correct relationship with the head drum 10 and to adjust the height the tape. Moreover, the components may easily contact and damage the tape.

A tape deck according to the present invention is characterised in that the height setting means and the guiding means comprise a single pole projecting from the pole base.

Preferably, said pole is tilted. More preferably, said pole has a radially projecting structure at its distal end, the proximal face of said structure providing a tape guiding surface and being helical for maintaining the height of the tape constant as it traverses the head drum. Still more preferably, said pole comprises a core, a spring means coaxially installed around the base of the core, a sleeve over the core above the spring means, optionally separated therefore by a collar, and a cap screwed onto the distal end of the core, the radially projecting structure being clamped between the sleeve and the cap by the action of the spring means. Yet more preferably, the radially projecting structure is provided with means to prevent is rotating about the axis of said pole with respect to the pole base and may comprise an annular member with an axially extending leg, the foot of the leg being coupled to the pole base to prevent rotation of the annular member about its axis relative to the pole base.

Other preferred and optional features of set forth in claims 6 to 16 appended hereto.

An embodiment of the present invention will now be described, by way of example, with reference to Figures 3 to 6 of the accompanying drawings in which::
Figure 1 is a schematic plan view illustrating a conventional tape guide device for a magnetic recording/reproducing apparatus;
Figure 2 is a schematic perspective view of a detail of Figure 1;
Figure 3 is a schematic perspective view illustrating a magnetic recording/reproducing apparatus using a tape guide device according to the present invention;
Figure 4 is a cross-sectional view illustrating the tape guide device of Figure 3;
Figure 5 is a perspective exploded view of the tape guide device of Figure 4; and
Figure 6 is a schematic view illustrating the operation of the tape guide device.

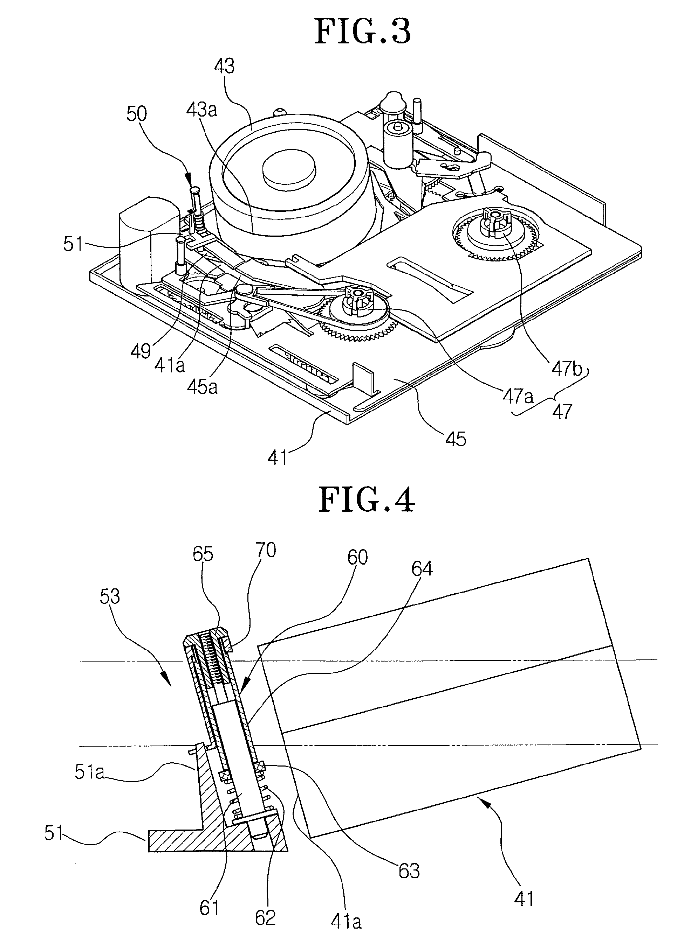

Referring to Figure 3, a head drum 43 is rotatably installed on a main deck 41. The head drum 43 is inclined relative to the main deck 41 at a predetermined angle and is rotated to record information on a tape T or to reproduce information recorded on the tape T. A sub-deck 45 is mounted on the main deck 41 and can be slid towards and away from the head drum 43 for loading and unloading the tape T.

A reel table 47 for drive a cassette tape is disposed on the sub-deck 45. The reel table 47 includes a supply reel side table 47a and a winding reel side table 47b. Tape guide devices guide the tape supplied from the supply reel on the supply reel side table 47a, through a predetermined path to a read surface 43a of the head drum 43. The tape guide devices includes a pole base assembly 50, movable along guides 41a, 45a, connected respectively to the main deck 41 and the sub-deck 45 to guide the tape.

The pole base assembly 50 includes a pole base 51 installed for movement between the guides 41a, 45a and an inclined pole unit 53 on the pole base 51 for guiding the tape so that it is properly aligned with the read surface 43a of the head drum 43. The pole base 51 towards and away from the left side of the head drum 43 by a link member 49, linked to the sub-deck 45, during the loading and unloading operations of the sub-deck 45. The pole base 51 is made of a plastic material.

Referring to Figure 4, the pole unit 53 includes a guide pole 60 installed on the pole base 51, and a flange member 70 installed at the upper end of the guide pole 60. The guide pole 60 is inclined at a predetermined angle for guiding tape into contact with the read surface 43a of the head drum 43. The guide pole 60 includes a fixed post 61, fixed to the pole base 51, a coil spring 62, a collar 63 and a guide sleeve 64 which are sequentially installed on the fixed post 61. The guide pole 60 also includes a cap member 65, connected to the uppermost end of the fixed post 61.

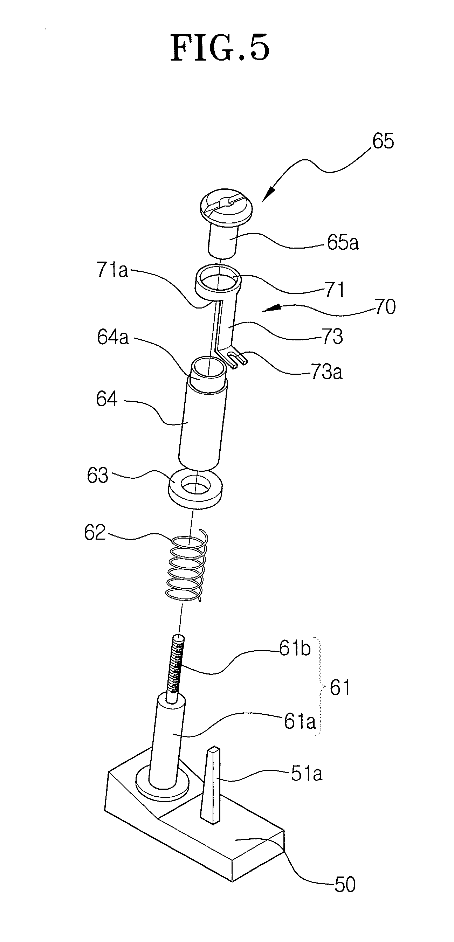

Referring to Figure 5, the fixed post 61 has a cylindrical body 61a and is inclined with respect to the pole base 51 at a predetermined angle. A threaded first fastening unit 61b projects upwards from the upper end of the body 61a of the fixed post 61. The first fastening unit 61b has a smaller outer diameter than the body 61a. The coil spring 62 is placed over the lower part of the fixed post 61. The collar 63 is placed over the body 61a so that is rests on the coil spring 62. The guide sleeve 64 placed over the fixed post 61 so that it rests on the collar 63. The guide sleeve 64 has a smaller outer diameter than the collar 63. An upper portion 64a of the guide sleeve 64 with a reduced outer diameter for supporting the flange member 70.

As described above, the coil spring 62, the collar 63 and the sleeve 64 are sequentially placed over the fixed post 61. In addition, the flange member 70 is placed on the upper portion 64a of the guide sleeve 64.

The flange member 70 includes an annular portion 71 into which the upper portion 64a of the sleeve 64 is inserted and an leg 73 extending down from one side of the annular portion 71. The lower edge of the annular portion 71 is forms substantially one turn of a helix. The annular portion 71 and the collar 63 form guides the upper and lower edges of the tape. Since the head drum 43 is inclined, the helical lower surface 71a of the annular portion 71 maintains the tape at the correct height for properly contacting the read surface 43a of the head drum 43. A spike 51a which is explained later, is inserted in the slot 73a between the prongs of a forked portion at the foot of the leg 73 to maintain a constant orientation relative to the pole base assembly 50 during a movement of the flange member 70.

The cap member 65 extends into the sleeve 64. The cap member 65 has an internally threaded portion 65a and is run onto the threaded fastening unit 61b like a nut. The cap member 65 prevents the guide sleeve 64 and the flange member 70 from being separated from the fixed post 61 and sets a height thereof. That is, the collar and the sleeve 64 are press against the coil spring 62. The height of the collar 63 and the sleeve 64 is adjusted by turning the cap 65 so that is moves up and down the threaded fastening unit 61b. Preferably, the threaded hole in the cap member 65 extends all the way through the cap member 65 to obtain a sufficient height adjusting margin of the sleeve 64.

Accordingly, the height of the sleeve 64 is adjusted by rotating the cap member 65. The sleeve 64 is rotated with the cap member 65. Thus, the tape guide device further includes a physical position fixing unit to prevent resulting rotation of the flange member 70, and to guide the physical position during the height adjustment of the sleeve 64.

The physical position fixing unit includes a spike 51a protruding from the pole base 51 and a leg 73 disposed extending from the lower end of the annular member 70. The spike 51a is positioned in a line with the guide pole 60 and preferably incorporated with the pole base 51. When the spike 51a is inserted into the guide slot 73a at the foot of the leg 73, the flange member 70 is not rotated when its height is being adjusted. Therefore, the helically inclined surface 71a of the flange member 70 has a predetermined angle with respect to the head drum 43.

In accordance with the present invention, the guide pole 60 is installed on the pole base 51, and the flange member 70 having the helical surface is installed at the upper end of the guide pole 60, thereby guiding the tape in the horizontal direction to the read surface 43a of the head drum 43 using one guide pole 60.

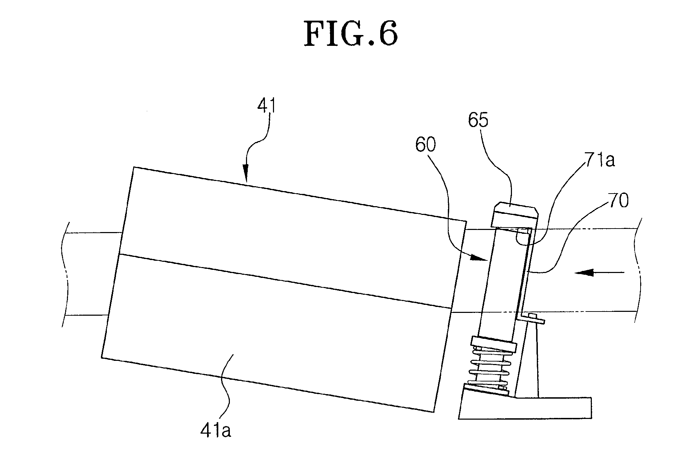

As illustrated in Figure 6, the tape T supplied from the supply reel side table 47a is guided to the read surface 43a of the head drum 43 by the guide pole 60. The tape T is guided by the helically inclined surface 71a of the flange member 70 horizontally to the read surface 43a of the head drum 43. With regard to the travelling height of the tape T, the height of the guide pole 60 is adjusted by rotating the cap member 65.

As described above, the tape guide device for the magnetic recording/reproducing apparatus guides the tape to the entrance of the head drum in the horizontal direction by using one guide pole instead of using a general tape guide roller. As a result, expenses for the tape guide device are cut down considerably due to a reduced number of components. Further, the tape may be protected by decreasing a contact area of the tape and the tape guide device.

## Claims

1. A tape deck comprising an inclined head drum (43) and a pole base unit (50) movable from a tape unloaded position to a tape loaded position adjacent to the head drum (43), the pole base unit (50) including a pole base (51), height setting means (60) for setting the height of the tape and guiding means (60) for guiding the tape such that its wraps smoothly around the head drum (43), **characterised in that** the height setting means (60) and the guiding means (60) comprise a single pole (60) projecting from the pole base (51).

2. A tape deck according to claim 1, wherein said pole (60) is tilted.

3. A tape deck according to claim 2, wherein said pole (60) has a radially projecting structure (70) at its distal end, the proximal face (71a) of said structure providing a tape guiding surface and being helical for maintaining the height of the tape constant as it traverses the head drum (41).

4. A tape deck according to claim 3, wherein said pole comprises:
a core (61);
a spring means (62) coaxially installed around the base of the core (61);
a sleeve (64) over the core above the spring means (62), preferably separated therefore by a collar (63); and
a cap (65) screwed onto the distal end of the core (61),
the radially projecting structure (70) being clamped between the sleeve (64) and the cap (65) by the action of the spring means (62).

5. A tape deck according to claim 3 or 4, wherein the radially projecting structure (70) comprises an annular member (71) with an axially extending leg (73), the foot (73a) of the leg (73) being coupled to the pole base (51) to prevent rotation of the annular member (71) about its axis relative to the pole base (51).

6. A tape guide device for a magnetic recording/reproducing apparatus, comprising:
a pole base assembly to guide a tape supplied from a supply reel and passed through a predetermined path to be moved parallel to a read surface of a head drum, wherein the pole base assembly comprises:
a pole base installed adjacently to or separately from one side of the head drum during a loading/unloading operation of the tape; and
a pole unit including a spiral flange inclined to the pole base in a direction parallel to the read surface of the head drum, to guide the tape entering the head drum to be inclined at a predetermined angle and positioned in the parallel direction to the read surface.

7. The device according to claim 6, wherein the pole unit comprises:
a guide pole installed on the pole base; and
a flange member having the spiral flange and being installed at an end of the guide pole.

8. The device according to claim 7, wherein the guide pole comprises:
a fixed post being fixed to the pole base, and having a first fastening unit of a predetermined length at a first end thereof;
a coil spring inserted into a second end of the fixed post;
a flange type ring movably supported by the fixed post to be positioned on the coil spring;
a cylindrical guide pipe inserted into the fixed post to have a smaller outer diameter than the ring, to support the flange member at an end thereof; and
a movable post having a second fastening unit fastened to the first fastening unit of the fixed post through the end of the guide pipe, and to prevent separation of the guide pipe and the flange unit, wherein a position of the ring, the guide pipe, the flange member and the movable post are controlled according to a fastening state of the movable post and the fixed post.

9. The device according to claim 8, wherein one of the first and second fastening units is a bolt and the other one is a nut, which are thereby tightened by mutual rotation.

10. The device according to claim 8, further comprising:
a third fastening unit having a reduced outer diameter, and disposed at the end of the guide pipe so that the flange member is inserted thereinto.

11. The device according to claim 8, further comprising:
a physical position fixing unit to constantly maintain a position of the flange member when the flange member is moved with the guide pipe.

12. The device according to claim 11, wherein the physical position fixing unit comprises:
a fixed pin protruding from the pole base at a predetermined distance in parallel with the guide pole; and
a guide slit unit disposed at an end of the flange member, to guide a movement of the flange member, and to further restrict the movement thereof by using the fixed pin.

13. The device according to claim 12, wherein the fixed pin is inserted in the guide slit.

14. The device according to claim 8, wherein the movable post comprises a nut hole provided on an end thereof, to obtain a position adjusting margin of the guide pipe.

15. The device according to claim 8, wherein a position of the tape is adjusted by rotating the movable post.

16. A tape guide device for a magnetic recording/reproducing apparatus, comprising:
a single guide pole to guide a tape to an entrance of a head drum provided on the tape guide device.
